# EUROPEAN PATENT SPECIFICATION

(11) **EP 3 786 048 B1**
(45) Date of publication and mention of the grant of the patent: **20.11.2024**
(21) Application number: 20192049.3
(22) Date of filing: 21.08.2020
(51) Int. Cl.: B62K 23/04, F02D 11/02, F02D 11/04

(54) **THROTTLE GRIP DEVICE THAT RECEIVES DRIVER'S THROTTLE OPERATION**
GASGRIFFVORRICHTUNG ZUR ANNAHME DER GASBEDIENUNG EINES FAHRERS
DISPOSITIF DE PRISE DE RÉGULATEUR QUI REÇOIT UN RÉGIME DE DÉCÉLÉRATION D'UN CONDUCTEUR

(30) Priority: 30.08.2019 JP 2019158463
(43) Date of publication of application: 03.03.2021
(73) Proprietor: TOYO DENSO KABUSHIKI KAISHA, Minato-ku Tokyo 105-0004 (JP)
(72) Inventor: SHINOHARA, Hiroyuki, Tsurugashima-shi, Saitama 350-2280 (JP)
(74) Representative: Kohler Schmid Möbus Patentanwälte

(56) References cited:
- EP-A1- 3 330 513
- JP-A- 2010 088 154
- JP-B2- 6 231 349

## Description

### BACKGROUND OF THE INVENTION

### Field of the Invention

The present invention relates to a throttle grip device that is attached to a handlebar of a vehicle and that receives a driver's throttle operation.

### Description of the Related Art

A throttle grip device that receives a driver's throttle operation is attached to a handlebar of a vehicle. The throttle grip device includes a throttle grip and a case. The throttle grip is arranged rotatably around a center axis of the handlebar. The case includes a rear housing and a front housing, and the handlebar is sandwiched by the rear housing and the front housing.

A rotor member that rotates in conjunction with rotation of the throttle grip and a sensor base plate on which a magnetic sensor, for example, a Hall element is arranged are arranged inside the case. The rotor member includes a magnet. The magnetic sensor measures a magnetic flux density of the magnet that changes with the rotation of the rotor member, and transmits the rotation angle of the throttle grip to an ECU or the like as an electric signal.

In the throttle grip device, a return spring composed of a coil-shaped torsion spring that engages with the rotor member is arranged in the case. The return spring urges the throttle grip that has been operated to rotate in a direction of opening an accelerator (hereinafter, referred to as a "normal direction") toward an initial position via the rotor member.

In recent years, a cruise control function is added also to a vehicle equipped with a handlebar. However, a function for releasing the cruise control function is applied to the vehicle in some cases by operating to rotate the throttle grip in an opposite direction of the normal direction (hereinafter, simply referred to as an "opposite direction"). Such a vehicle is provided with another spring for urging the throttle grip that has been operated to rotate in the opposite direction toward the initial position. As another spring, there is another known return spring composed of a coil-shaped torsion spring arranged to be adjacent to the return spring in an axial direction of the handlebar (hereinafter, simply referred to as an "axial direction") (for example, Japanese Laid-open Patent Publication (Kokai) No. 2009-13833).

In a case where such another known return spring of Japanese Laid-open Patent Publication (Kokai) No. 2009-13833 is arranged, however, two coil-shaped torsion springs are arranged side by side in the axial direction. This causes a drawback that the throttle grip device increases in size in the axial direction. Additionally, document EP3330513 is known, which shows all the features of the preamble of independent claim 1.

### SUMMARY OF THE INVENTION

The present invention provides a throttle grip device capable of suppressing an increase in size.

Accordingly, an aspect of the present invention provides a throttle grip device as specified in claims 1 to 6.

According to the present invention, the rotation axis of the first interlocking member and the rotation axis of the second interlocking member are arranged on an identical line. However, the second interlocking member stores the part of the first interlocking member. This eliminates the need for the first interlocking member and the second interlocking member being in range with each other side by side, and an increase in size of the throttle grip device can be suppressed.

Further features of the present invention will become apparent from the following description of exemplary embodiments (with reference to the attached drawings).

### BRIEF DESCRIPTION OF THE DRAWINGS

FIG. 1 is a perspective view schematically showing an outer appearance of a throttle grip device according to an embodiment of the present invention.
FIG. 2 is an exploded perspective view of each of components housed in a case in FIG. 1 that are expanded along an axial direction of a handlebar.
FIG. 3 is a perspective view for explaining a positional relationship of a ring member, a return spring, and a rotor member.
FIG. 4 is a perspective view for explaining a positional relationship of the ring member, a C spring, and the rotor member.
FIG. 5 is a perspective view for explaining a positional relationship of the ring member, the C spring, the return spring, and the rotor member.
FIG. 6 is a cross-sectional view for explaining arrangement states of the rotor member, the ring member, the C spring, and an inner case in the throttle grip device.
FIG. 7A and FIG. 7B are views for explaining a positional relationship of the ring member and the rotor member, when the throttle grip is rotated.
FIG. 8 is a diagram for explaining generation of an operation feeling when the throttle grip is rotated.
FIG. 9A and FIG. 9B are diagrams schematically showing a configuration of a variation of the throttle grip device according to an embodiment of the present invention.

### DESCRIPTION OF THE EMBODIMENTS

Hereinafter, embodiments of the present invention will be described in detail with reference to the drawings.

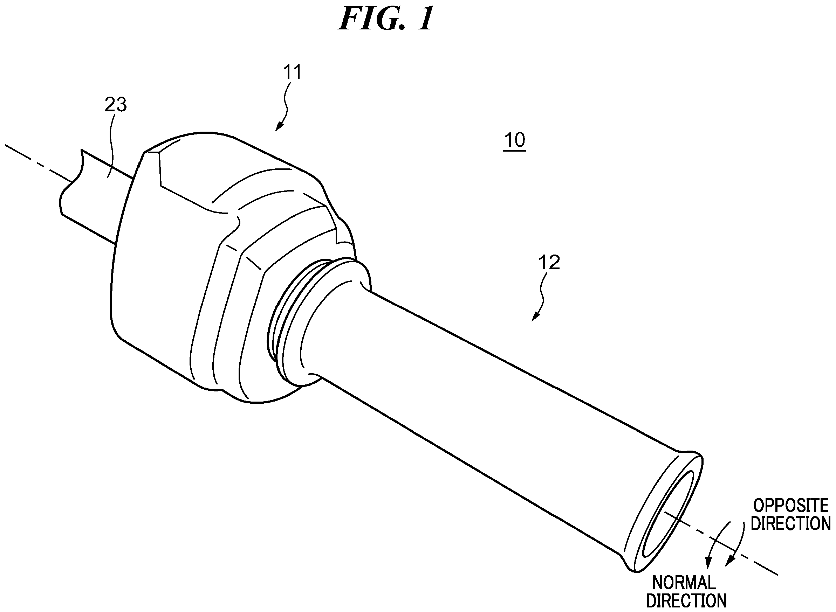

FIG. 1 is a perspective view schematically showing an outer appearance of a throttle grip device 10 according to the present embodiment. In FIG. 1, the throttle grip device 10 includes a case 11 attached to a handlebar 23 of a vehicle, and a throttle grip 12 extending from the case 11 in an axial direction of the handlebar 23 (shown by a chain line in the figure). The case 11 includes a rear housing and a front housing, and the handlebar 23 is sandwiched by the rear housing and the front housing. The throttle grip 12 is arranged rotatably around a center axis of the handlebar 23 (hereinafter, simply referred to as "around the center axis"), is rotatable in a normal direction, which is a direction (one direction) to be rotated to a driver side from an initial position, and is also rotatable in the opposite direction, which is a direction (the other direction) to be rotated to a traveling side of the vehicle from the initial position.

The throttle grip device 10 receives a driver's throttle operation. When the throttle grip 12 is operated to rotate in the normal direction, the vehicle exerts a throttle control function. When the throttle grip 12 is operated to rotate in the opposite direction, the vehicle deactivates the cruise control function.

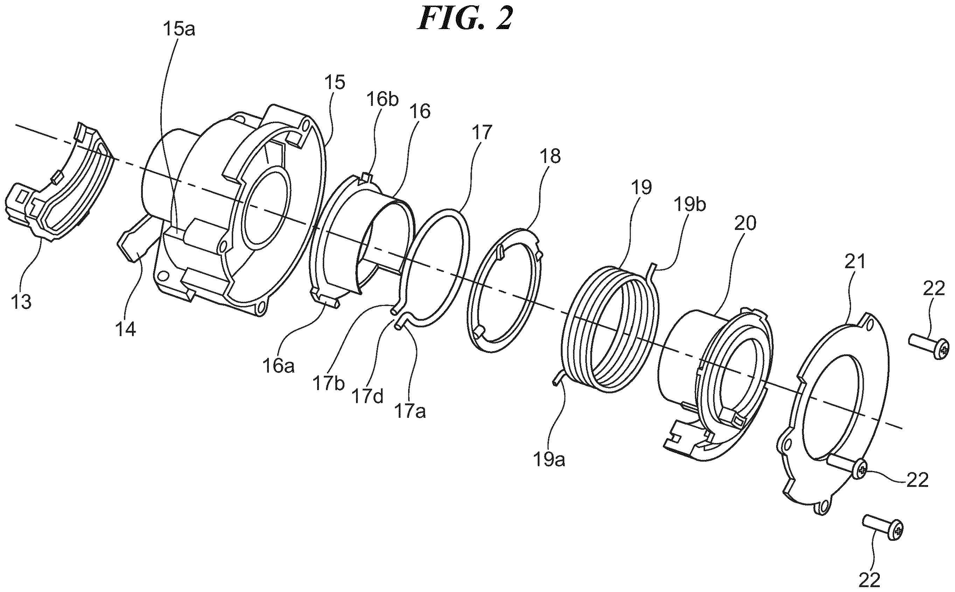

FIG. 2 is an exploded perspective view of each of components housed in the case 11 in FIG. 1 that are expanded along the axial direction of the handlebar 23.

In FIG. 2, in the case 11, a sensor holder 13, a sensor base plate 14, an inner case 15, a ring member 16 (second interlocking member), a C spring 17 (second urging member), a base washer 18, a return spring 19 (first urging member), a rotor member 20 (first interlocking member), and a cover 21 are arranged along the axial direction of the handlebar 23 from a center side of the vehicle. When the cover 21 is attached to the inner case 15 with a plurality of screws 22, the ring member 16 to the rotor member 20 are housed in the inner case 15. The sensor base plate 14 is fitted into the sensor holder 13, and the sensor holder 13 is attached to the inner case 15.

The ring member 16 and the rotor member 20 are housed in the inner case 15 so as to be rotatable around the center axis. The ring member 16 rotates in the opposite direction in conjunction with rotation of the throttle grip 12 in the opposite direction. The rotor member 20 rotates in the normal direction in conjunction with the rotation of the throttle grip 12 in the normal direction, and also rotates in the opposite direction in conjunction with the rotation of the throttle grip 12 in the opposite direction. Here, a rotation axis of the rotor member 20 and a rotation axis of the ring member 16 are arranged on an identical line. It should be noted that the ring member 16 also rotates in the normal direction to a predetermined position in conjunction with the rotation of the throttle grip 12 in the normal direction. However, after reaching the predetermined position, even if the throttle grip 12 further rotates in the normal direction, the ring member 16 does not rotate in the normal direction.

The rotor member 20 holds a magnet (not shown) so as to face the sensor base plate 14. A magnetic sensor, for example, a Hall element of the sensor base plate 14 detects a change in magnetic flux density accompanied by the rotation of the rotor member 20, and thus detects a rotation angle of the rotor member 20, that is, a rotation angle of the throttle grip 12. The detected rotation angle of the throttle grip 12 is transmitted to an ECU or the like of the vehicle as an electric signal, and a throttle control function is exerted, based on the electric signal.

For example, when the rotor member 20 rotates in the opposite direction, the magnetic sensor of the sensor base plate 14 detects a change or the like in magnetic flux density accompanied by the rotation in the opposite direction, and transmits the change or the like as an electric signal to the ECU or the like of the vehicle. The vehicle deactivates the cruise control function, based on the electric signal.

The C spring 17 is a C-shaped spring having an opening 17d formed by cutting out an annular member at one place, and includes two hooks 17a and 17b (engagement portions) that protrude in a radial direction from both ends of the opening 17d. It should be noted that the hook 17a and the hook 17b may protrude in the axial direction of the handlebar 23. The return spring 19 is composed of a coil-shaped torsion spring, and both ends of a wire material constituting the torsion spring protrude in the radial direction to form two hooks 19a and 19b. Further, the hook 19a and the hook 19b may also protrude in the axial direction of the handlebar 23.

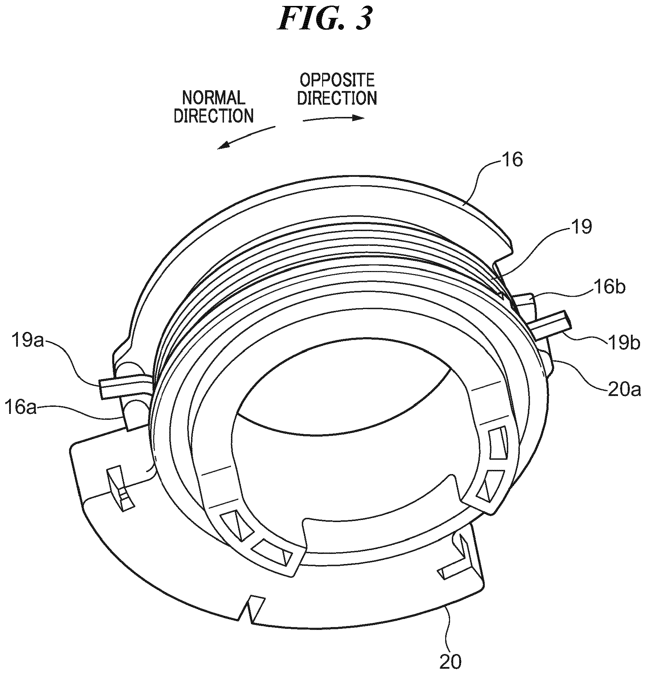

FIG. 3 to FIG. 5 are perspective views for explaining positional relationships of the ring member 16, the C spring 17, the return spring 19, and the rotor member 20 in FIG. 2. It should be noted that, in each of the figures, components are appropriately omitted in order to facilitate understanding of the configuration.

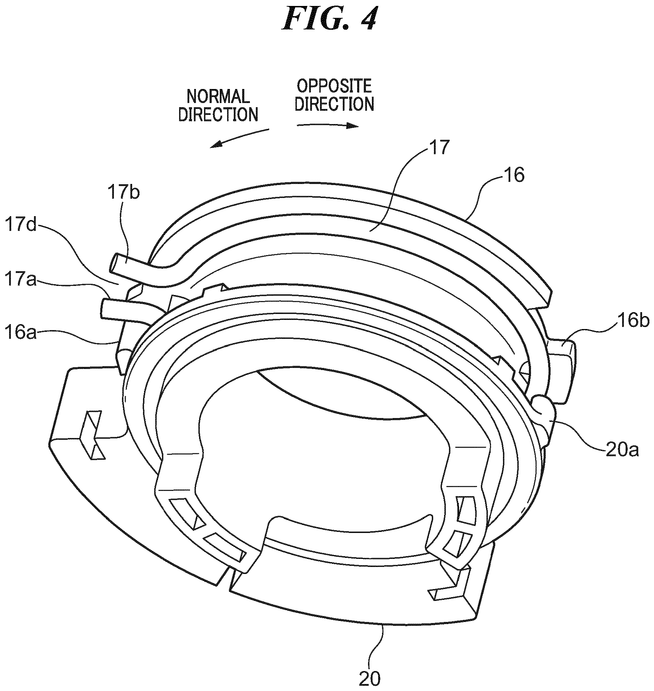

In FIG. 3 and FIG. 4, the ring member 16 and the rotor member 20 are each made of a substantially cylindrical member. The cylindrical part of the rotor member 20 is configured to have a smaller diameter than that of the cylindrical part of the ring member 16. The cylindrical part of the ring member 16 coaxially houses the cylindrical part of the rotor member 20. Further, the C spring 17 and the return spring 19 are each attached to the cylindrical part of the ring member 16 to be wound around. The base washer 18 having a ring shape is interposed between the C spring 17 and the return spring 19 to prevent the C spring 17 and the return spring 19 from interfering with each other.

As shown in FIG. 3, one hook 19a of the return spring 19 engages with a locking portion 16a of the ring member 16, and in addition, the other hook 19b engages with a locking portion 20a of the rotor member 20. When the throttle grip 12 rotates in the normal direction, the rotor member 20 rotates in the normal direction, but the ring member 16 does not rotate in the normal direction from the initial position. Hence, when the throttle grip 12 rotates in the normal direction, the hook 19a of the return spring 19 that engages with the locking portion 16a of the ring member 16 does not move. Therefore, the locking portion 20a of the rotor member 20 twists the return spring 19 via the hook 19b. Accordingly, a reaction force is generated in the return spring 19, and the return spring 19 urges the rotor member 20 toward the initial position via the locking portion 20a.

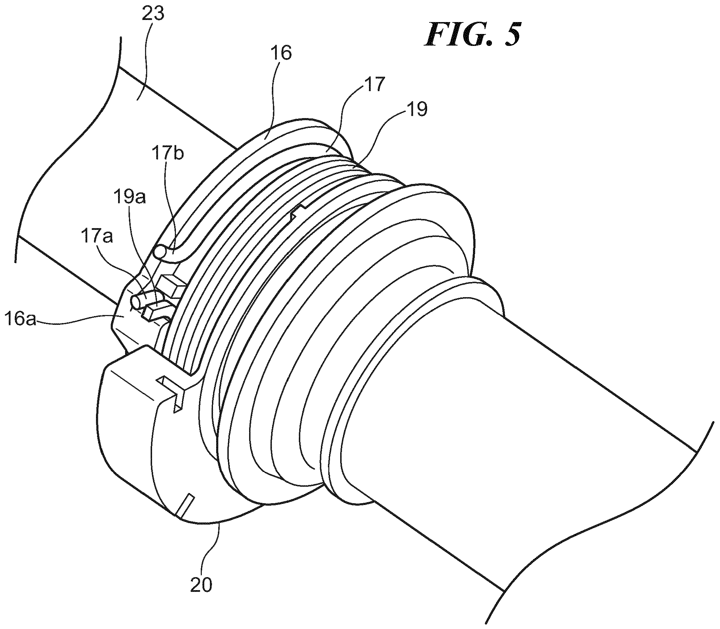

As shown in FIG. 4, the hook 17a of the C spring 17 engages with the locking portion 16a of the ring member 16. On the other hand, the hook 17b of the C spring 17 engages with the locking portion 15a of the inner case 15. When the throttle grip 12 rotates in the opposite direction, the ring member 16 also rotates in the opposite direction, but the inner case 15 does not move. Accordingly, the hook 17b of the C spring 17 does not move, and only the hook 17a moves and approaches the hook 17b. As a result, since the opening 17d is deformed to be closed, a reaction force is generated in the C spring 17 to open the opening 17d, and the C spring 17 urges the ring member 16 toward the initial position via the locking portion 16a. It should be noted that, as shown in FIG. 5, both the hook 17a of the C spring 17 and the hook 19a of the return spring 19 are locked to the locking portion 16a of the ring member 16.

According to the throttle grip device 10, the rotation axis of the rotor member 20 and the rotation axis of the ring member 16 are in range with each other, but the cylindrical part of the ring member 16 coaxially houses the cylindrical part of the rotor member 20. This eliminates the need for arranging the rotor member 20 and the ring member 16 side by side on the identical line, and an increase in size of the throttle grip device 10 can be suppressed.

Further, according to the throttle grip device 10, the C spring 17, which urges the ring member 16 toward the initial position when the ring member 16 rotates in the opposite direction in conjunction with the rotation of the throttle grip 12 in the opposite direction, is composed of the C-shaped spring having the opening 17d formed by cutting out the annular member at one place. Hence, arranging the C spring 17 side by side with the return spring 19 in the axial direction of the handlebar 23 does not occupy much space, and an increase in size of the throttle grip device 10 can be suppressed. Further, since the C spring 17 can be easily assembled to the cylindrical part of the ring member 16 by opening the opening 17d, productivity of the throttle grip device 10 can be improved.

In the throttle grip device 10 according to the present embodiment, as described above, the rotation angle of the throttle grip 12 is detected by the Hall element of the sensor base plate 14 and is transmitted to the ECU or the like of the vehicle as an electric signal. This eliminates a throttle wire that transmits the rotation of the throttle grip to the throttle valve. However, since a frictional resistance caused by rubbing or the like of the throttle wire when the throttle grip is operated provides the driver with a response to the operation (operation feeling), simply eliminating the throttle wire cannot provide the driver with the operation feeling. To deal with this, in the throttle grip device 10 according to the present embodiment, the ring member 16 and the rotor member 20 are used to generate a sliding feeling to provide the driver with the operation feeling.

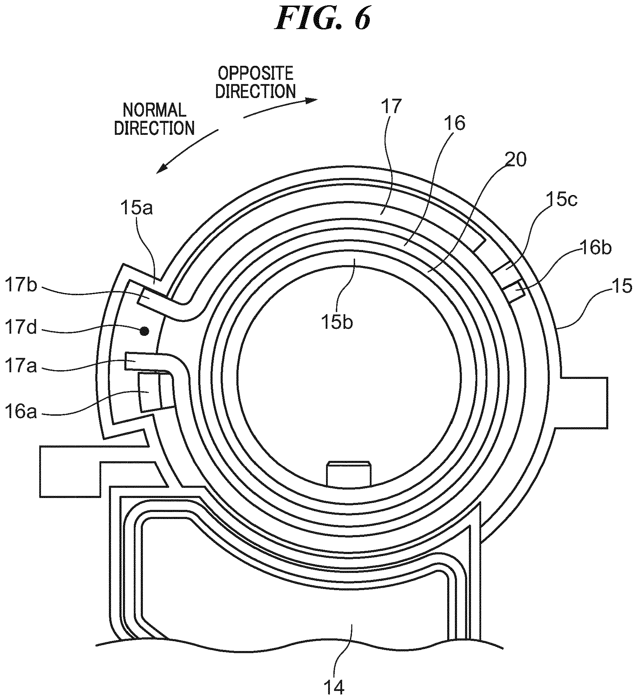

FIG. 6 is a cross-sectional view for explaining arrangement states of the rotor member 20, the ring member 16, the C spring 17, and the inner case 15, in the throttle grip device 10. FIG. 6 corresponds to a case where the rotor member 20, the ring member 16, and the C spring 17 are housed in the inner case 15, when viewed from an outside of the vehicle in the axial direction of the handlebar 23.

In FIG. 6, the cylindrical part of the rotor member 20 and the cylindrical part of the ring member 16 are arranged coaxially with an inner cylindrical part 15b of the inner case 15. The cylindrical part of the rotor member 20 stores the inner cylindrical part 15b of the inner case 15. The cylindrical part of the ring member 16 stores the cylindrical part of the rotor member 20. Further, the C spring 17 is attached to the cylindrical part of the ring member 16 to be wound around. The hook 17a of the C spring 17 engages with the locking portion 16a of the ring member 16. On the other hand, the hook 17b of the C spring 17 engages with the locking portion 15a of the inner case 15. Furthermore, the ring member 16 has a protrusion 16b, which protrudes in the radial direction from the cylindrical part at a position substantially symmetrical to the locking portion 16a with respect to the center of the cylindrical part. That is, the locking portion 16a and the protrusion 16b face each other interposing the rotation axis of the ring member 16. It should be noted that the protrusion 16b may protrude in the axial direction of the handlebar 23. Further, the inner case 15 has a stopper portion 15c that protrudes toward the ring member 16 and the C spring 17.

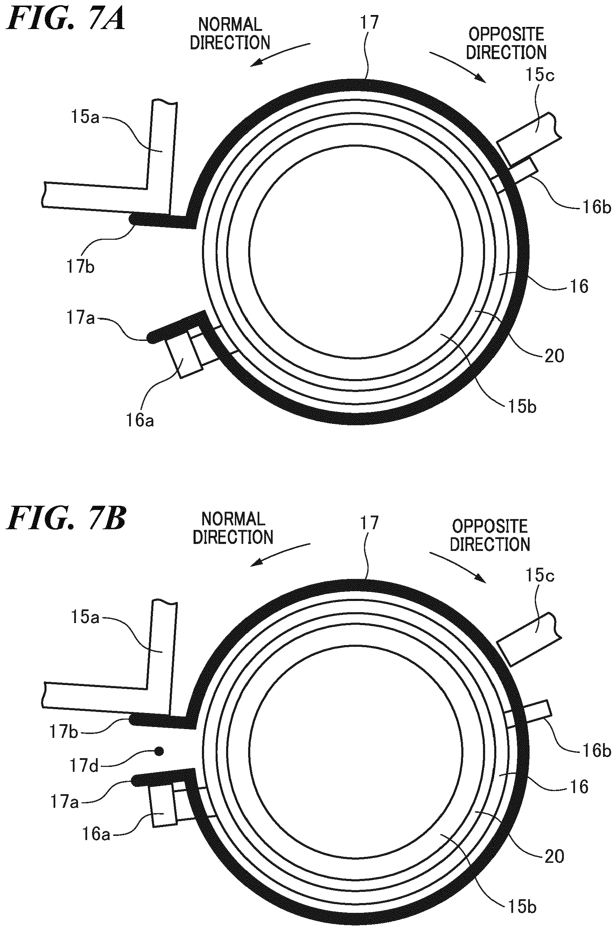

In a neutral state in which the throttle grip 12 does not rotate in either the normal direction or the opposite direction, the protrusion 16b of the ring member 16 abuts the stopper portion 15c of the inner case 15 (FIG. 7A). Therefore, the ring member 16 in the neutral state does not rotate in the normal direction. Further, when the throttle grip 12 rotates in the opposite direction from the neutral state, the ring member 16 also rotates in the opposite direction, and the locking portion 16a moves toward the locking portion 15a of the inner case 15 and tries to close the opening 17d of the C spring 17. However, at this time, the protrusion 16b of the ring member 16 moves away from the stopper portion 15c of the inner case 15 (FIG. 7B).

When attaching the C spring 17 to the cylindrical part of the ring member 16, an operator holds the hook 17a and the hook 17b with fingers, a jig or the like, and narrows the opening 17d from a natural state. In the present embodiment, the C spring 17 is attached to the cylindrical part of the ring member 16 so that the C spring 17 in the neutral state is not restored to the natural state. Therefore, since the C spring 17 tries to be restored even in the neutral state, the hook 17a of the C spring 17 is continuously urging the ring member 16 in the normal direction via the locking portion 16a. It should be noted that since the ring member 16 does not rotate in the normal direction any more from the neutral state, the C spring 17 is continuously urging the ring member 16 in the normal direction with a constant force while the throttle grip 12 is rotating in the normal direction.

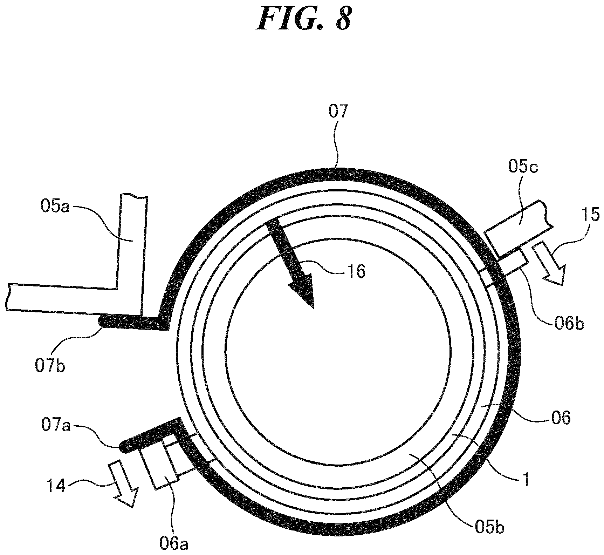

At this time, as shown in FIG. 8, a pressing force 24 acts on the locking portion 16a from the hook 17a toward the lower right in the figure. Such a pressing force 24 causes the ring member 16 to generate a counterclockwise moment in the figure, the moment causes the protrusion 16b to press the stopper portion 15c toward the upper left in the figure, and a reaction force 25 acts on the protrusion 16b toward the lower right in the figure as a reaction of the pressing force 24.

Here, since both the locking portion 16a and the protrusion 16b are parts of the ring member 16, the ring member 16 tries to move toward the lower right in the figure due to the pressing force 24 and the reaction force 25. As a result, the ring member 16 abuts the rotor member 20. Since the ring member 16 can be regarded as a single beam, a resultant force 26 of the pressing force 24 and the reaction force 25 acts on a midway part between the locking portion 16a and the protrusion 16b of the ring member 16. That is, the resultant force 26 presses the ring member 16 against the rotor member 20.

At this time, when the throttle grip 12 is further rotated in the normal direction, the ring member 16 does not rotate in the normal direction, whereas the rotor member 20 rotates in the normal direction, because the protrusion 16b abuts the stopper portion 15c. That is, the rotor member 20, against which the ring member 16 is pressed, slides with respect to the ring member 16. Accordingly, a frictional force is generated between the ring member 16 and the rotor member 20.

Further, the rotor member 20, against which the ring member 16 is pressed by the resultant force 26, is pressed against the inner cylindrical part 15b of the inner case 15, but the inner cylindrical part 15b does not rotate. Accordingly, a frictional force is also generated between the rotor member 20 and the inner cylindrical part 15b. Then, the frictional force between the ring member 16 and the rotor member 20 and the frictional force between the rotor member 20 and the inner cylindrical part 15b generate a sliding feeling which provides the driver with an operation feeling.

As described above, the resultant force 26 acts on the midway part between the locking portion 16a and the protrusion 16b of the ring member 16. Hence, by changing the position of the locking portion 16a or the protrusion 16b, the position in the ring member 16 on which the resultant force 26 acts can be changed and the position where the frictional force is generated can be changed.

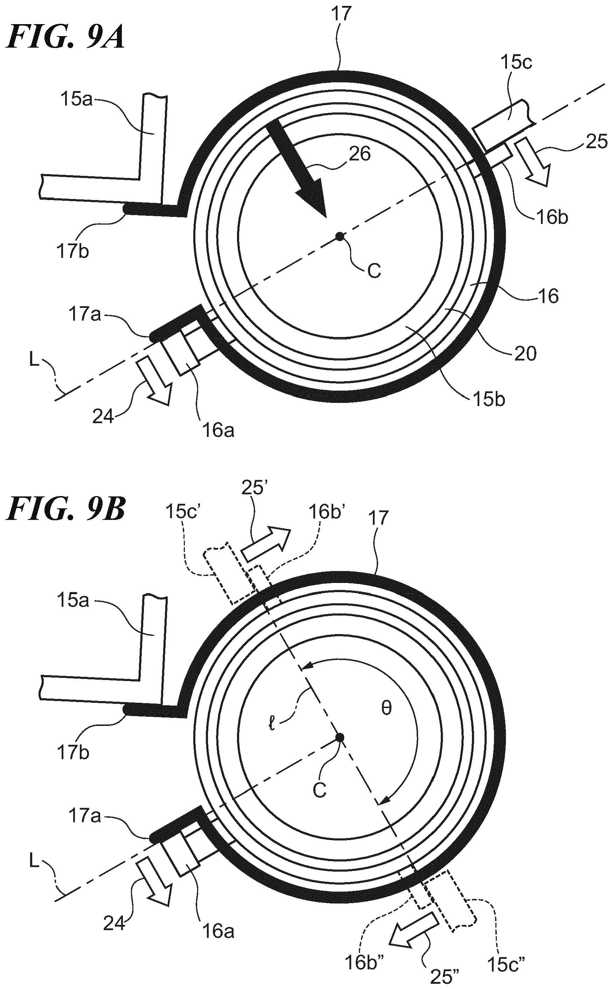

Further, for example, as shown in FIG. 9A, in a case where the locking portion 16a, which is a point of action of the pressing force 24, and the protrusion 16b, which is a point of action of the reaction force 25, are arranged at symmetrical positions with respect to a center C of the cylindrical part of the ring member 16, that is, arranged on a line L passing across the center C, the pressing force 24 and the reaction force 25 are superimposed as the resultant force 26 without being separated. Accordingly, the frictional force between the ring member 16 and the rotor member 20 and the frictional force between the rotor member 20 and the inner cylindrical part 15b can be maximized. Therefore, from the viewpoint of providing a clear operation feeling to the driver, it is preferable that the locking portion 16a and the protrusion 16b be arranged at symmetrical positions with respect to the center C of the cylindrical part of the ring member 16, that is, at substantially opposite positions interposing the rotation axis of the ring member 16.

It should be noted that when the position where the resultant force 26 acts changes, the direction of action of the resultant force 26 also changes. Thus, the operation feeling to be provided to the driver changes. Here, a critical position of the contact between the stopper portion 15c and the protrusion 16b where the resultant force 26 can effectively provide an operation feeling is present on a line l, which is orthogonal at the center (the rotation axis of the ring member 16) C to the line L passing through the locking portion 16a and the center C, as shown in FIG. 9B. It should be noted that in FIG. 9B, the critical position of the contact between the stopper portion 15c and the protrusion 16b in a case where the contact is present on the hook 17b side is indicated by a stopper portion 15c', a protrusion 16b', and a reaction force 25'. Further, in FIG. 9B, the critical position of the contact between the stopper portion 15c and the protrusion 16b in a case where the contact is present on the hook 17a side is indicated by a stopper portion 15c", a protrusion 16b", and a reaction force 25". That is, in consideration that the resultant force 26 can effectively provide the operation feeling, it is preferable to arrange the protrusion 16b and the stopper portion 15c on an opposite side of the locking portion 16a with respect to the line l orthogonal at the center (the rotation axis of the ring member 16) C to the line L passing through the locking portion 16a and the center C (within a range angle θ from the protrusion 16b' to the protrusion 16b" clockwise in FIG. 9B).

According to the above-described throttle grip device 10, an operation feeling can be provided to a driver without the provision of a sliding member or a friction plate, the number of component parts can be reduced, and weight reduction, size reduction, and cost reduction can be achieved at the same time. Further, since the ring member 16 and the rotor member 20, which are rotation members, are pressed against each other, an occurrence of rattling at the time of rotating operation can be suppressed, and a high-quality operation feeling can be provided to the driver who operates the throttle grip 12.

Although the preferred embodiments of the present invention have been described above, the present invention is not limited to the above-described embodiments, and various modifications and changes can be made within the scope of the appended claims.

## Claims

1. A throttle grip device (10) having a case (11) attached to a handlebar (23) of a vehicle, a throttle grip (12) extending in an axial direction of the handlebar (23) from the case (11), a first interlocking member (20), and a first urging member (19), wherein the throttle grip (12) is rotatable in a normal direction that is one direction from an initial position around an axis of the handlebar (23) and is rotatable in an opposite direction that is the other direction from the initial position around the axis of the handlebar (23), the first interlocking member (20) is rotatable in conjunction with rotation in the normal direction and rotation in the opposite direction of the throttle grip (12), in a case where the first interlocking member (20) rotates in the normal direction, the first urging member (19) urges the first interlocking member (20) toward the initial position, in a case where the throttle grip (12) rotates in the normal direction, the vehicle exerts a throttle control function, and in a case where the throttle grip (12) rotates in the opposite direction, the vehicle deactivates a cruise control function, the throttle grip (12) comprising:
a second interlocking member (16) that is rotatable in conjunction with the rotation in the opposite direction of the throttle grip (12); and
a second urging member (17) that urges the second interlocking member (16) toward the initial position, in a case where the second interlocking member (16) rotates in the opposite direction,
wherein the first urging member (19) includes a coil-shaped torsion spring,
the first urging member (19) and the second urging member (17) are arranged side by side in the axial direction of the handlebar (23),
wherein the throttle grip device (10) further comprises
an inner case (15) that houses the second interlocking member (16) in an inside,
wherein the inner case (15) includes a stopper portion (15c; 15c'; 15c") that protrudes toward the inside,
the second urging member (17) urges the second interlocking member (16) in the normal direction,
the second interlocking member (16) includes a locking portion (16a) which engages with the second urging member (17) and a protrusion (16b; 16b'; 16b") which abuts the stopper portion (15c; 15c'; 15c"), and
the protrusion (16b; 16b'; 16b") is arranged on an opposite side of the locking portion (16a) with respect to a first line which is orthogonal to a second line connecting the locking portion (16a) and a rotation axis of the second urging member (17) and passes across the rotation axis,
wherein a rotation axis of the first interlocking member (20) and a rotation axis of the second interlocking member (16) are in range with each other, and
the second interlocking member (16) stores a part of the first interlocking member (20),
**characterised**
**in that** in a case where the throttle grip (12) rotates in the normal direction, the second interlocking member (16) does not rotate, and the second urging member (17) continuously urges the second interlocking member (16) in the normal direction while not being deformed.

2. The throttle grip device (10) according to claim 1,
wherein the locking portion (16a) and the protrusion (16b; 16b'; 16b") substantially face each other interposing a rotation axis of the second interlocking member (16).

3. The throttle grip device (10) according to claim 1,
wherein in a case where the throttle grip (12) rotates in the opposite direction, the first interlocking member and the second interlocking member (16) are both rotatable in the opposite direction.

4. The throttle grip device (10) according to claim 1,
wherein the second urging member (17) includes a C-shaped spring having an opening (17d) formed by cutting out one place.

5. The throttle grip device (10) according to claim 4,
wherein in a case where the throttle grip (12) rotates in the opposite direction, the C-shaped spring (17) is deformed to close the opening (17d).

6. The throttle grip device (10) according to claim 4, further comprising the inner case (15) that houses the second interlocking member (16) in an inside and has a stopper portion (15c; 15c'; 15c") that protrudes toward the inside,
wherein the C-shaped spring (17) includes an engagement portion (17a, 17b) that protrudes from both ends of the opening (17d) in a radial direction of the C-shaped spring (17) or in an axial direction of the handlebar (23), and urges the second interlocking member (16) in the normal direction via the engagement portion (17a, 17b), and
a protrusion (16b; 16b'; 16b") of the second interlocking member (16) protrudes in a radial direction of the second interlocking member (16) or in the axial direction of the handlebar (23), and abuts the stopper portion (15c; 15c'; 15c") to block rotation in the normal direction of the second interlocking member (16).

## Patentansprüche

1. Gasgriffvorrichtung (10) mit einem Gehäuse (11), das an einer Lenkstange (23) eines Fahrzeugs befestigt ist, einem Gasgriff (12), der sich in einer axialen Richtung der Lenkstange (23) von dem Gehäuse (11) erstreckt, einem ersten Verriegelungselement (20) und einem ersten Drückelement (19), wobei der Gasgriff (12) in einer normalen Richtung drehbar ist, d.h. in einer Richtung von einer Ausgangsposition um eine Achse der Lenkstange (23), und in einer entgegengesetzten Richtung drehbar ist, d.h. in der anderen Richtung von der Ausgangsposition um die Achse der Lenkstange (23), wobei das erste Verriegelungselement (20) in Verbindung mit der Drehung in der normalen Richtung und Drehung in der entgegengesetzten Richtung des Gasgriffs (12) drehbar ist, wenn sich das erste Verriegelungselement (20) in der normalen Richtung dreht, das erste Drückelement (19) das erste Verriegelungselement (20) in Richtung der Ausgangsposition drängt, wenn sich der Gasgriff (12) in der normalen Richtung dreht, das Fahrzeug eine Gassteuerungsfunktion ausübt, und wenn sich der Gasgriff (12) in der entgegengesetzten Richtung dreht, das Fahrzeug eine Tempomatfunktion deaktiviert, wobei der Gasgriff (12) umfasst:
ein zweites Verriegelungselement (16), das in Verbindung mit der Drehung in der entgegengesetzten Richtung des Gasgriffs (12) drehbar ist; und
ein zweites Drückelement (17), welches das zweite Verriegelungselement (16) in Richtung der Ausgangsposition drängt, wenn sich das zweite Verriegelungselement (16) in der entgegengesetzten Richtung dreht,
wobei das erste Drückelement (19) eine schraubenförmige Torsionsfeder aufweist,
das erste Drückelement (19) und das zweite Drückelement (17) in axialer Richtung der Lenkstange (23) nebeneinander angeordnet sind, wobei die Gasgriffvorrichtung (10) ferner umfasst:
ein inneres Gehäuse (15), in dessen Innerem das zweite Verriegelungselement (16) aufgenommen ist,
wobei das innere Gehäuse (15) einen Stopperabschnitt (15c; 15c'; 15c") aufweist, der zur Innenseite hin vorsteht,
das zweite Drückelement (17) das zweite Verriegelungselement (16) in die normale Richtung drückt,
das zweite Verriegelungselement (16) einen Verriegelungsabschnitt (16a), der mit dem zweiten Drückerelement (17) in Eingriff steht, und einen Vorsprung (16b; 16b'; 16b") aufweist, der an dem Stopperabschnitt (15c; 15c'; 15c") anliegt, und
der Vorsprung (16b; 16b'; 16b") an einer gegenüberliegenden Seite des Verriegelungsabschnitts (16a) in Bezug auf eine erste Linie angeordnet ist, die orthogonal zu einer zweiten Linie ist, die den Verriegelungsabschnitt (16a) und eine Drehachse des zweiten Drückelements (17) verbindet und die Drehachse durchquert,
wobei eine Drehachse des ersten Verriegelungselements (20) und eine Drehachse des zweiten Verriegelungselements (16) in Reichweite zueinander liegen, und
das zweite Verriegelungselement (16) einen Teil des ersten Verriegelungselements (20) lagert,
**dadurch gekennzeichnet, dass**,
wenn sich der Gasgriff (12) in der normalen Richtung dreht, das zweite Verriegelungselement (16) sich nicht dreht und das zweite Drückelement (17) das zweite Verriegelungselement (16) kontinuierlich in die normale Richtung drückt, ohne dass es verformt wird.

2. Gasgriffvorrichtung (10) nach Anspruch 1, wobei der Verriegelungsabschnitt (16a) und der Vorsprung (16b; 16b'; 16b") im Wesentlichen einander zugewandt sind, wobei eine Drehachse des zweiten Verriegelungselements (16) dazwischen liegt.

3. Gasgriffvorrichtung (10) nach Anspruch 1, wobei, wenn sich der Gasgriff (12) in der entgegengesetzten Richtung dreht, das erste Verriegelungselement und das zweite Verriegelungselement (16) beide in der entgegengesetzten Richtung drehbar sind.

4. Gasgriffvorrichtung (10) nach Anspruch 1, wobei das zweite Drückelement (17) eine C-förmige Feder mit einer Öffnung (17d) aufweist, die durch Ausschneiden einer Stelle gebildet ist.

5. Gasgriffvorrichtung (10) nach Anspruch 4, wobei, wenn sich der Gasgriff (12) in der entgegengesetzten Richtung dreht, die C-förmige Feder (17) verformt wird, um die Öffnung (17d) zu schließen.

6. Gasgriffvorrichtung (10) nach Anspruch 4, weiterhin umfassend das innere Gehäuse (15), welches das zweite Verriegelungselement (16) in einem Inneren aufnimmt und einen Stopperabschnitt (15c; 15c'; 15c") aufweist, der nach innen vorsteht,
wobei die C-förmige Feder (17) einen Eingriffsabschnitt (17a, 17b) aufweist, der von beiden Enden der Öffnung (17d) in einer radialen Richtung der C-förmigen Feder (17) oder in einer axialen Richtung der Lenkstange (23) vorsteht, und das zweite Verriegelungselement (16) über den Eingriffsabschnitt (17a, 17b) in der normalen Richtung drückt, und
ein Vorsprung (16b; 16b'; 16b") des zweiten Verriegelungselements (16) in einer radialen Richtung des zweiten Verriegelungselements (16) oder in der axialen Richtung der Lenkstange (23) vorsteht und an den Stopperabschnitt (15c; 15c'; 15c") anstößt, um die Drehung in der normalen Richtung des zweiten Verriegelungselements (16) zu blockieren.

## Revendications

1. Dispositif de manette des gaz (10) comportant un carter (11) lié à un guidon (23) d'un véhicule, une manette des gaz (12) étendue dans une direction axiale du guidon (23) depuis le carter (11), un premier élément d'inter-verrouillage (20) et un premier élément de poussée (19), dans lequel la manette des gaz (12) peut être entraînée en rotation dans une direction normale qui est une première direction par rapport à une position initiale autour d'un axe du guidon (23) et peut être entraînée en rotation dans une direction opposée qui est l'autre direction par rapport à la position initiale autour de l'axe du guidon (23), le premier élément d'inter-verrouillage (20) peut être entraîné en rotation en conjonction avec la rotation dans la direction normale et avec la rotation dans la direction opposée de la manette des gaz (12), dans le cas où le premier élément d'inter-verrouillage (20) est entraîné en rotation dans la direction normale, le premier élément de poussée (19) pousse le premier élément d'inter-verrouillage (20) en direction de la position initiale, dans le cas où la manette des gaz (12) est entraînée en rotation dans la direction normale, le véhicule exerce une fonction de régulation des gaz et dans le cas où la manette des gaz (12) est entraînée en rotation dans la direction opposée, le véhicule désactive une fonction de régulation de vitesse, la manette des gaz (12) comprenant :
un second élément d'inter-verrouillage (16) qui peut être entraîné en rotation en conjonction avec la rotation dans la direction opposée de la manette des gaz (12) ; et
un second élément de poussée (17) qui pousse le second élément d'inter-verrouillage (16) en direction de la position initiale, dans le cas où le second élément d'inter-verrouillage (16) est entraîné en rotation dans la direction opposée,
dans lequel :
le premier élément de poussée (19) inclut un ressort de torsion en forme de bobine, et
le premier élément de poussée (19) et le second élément de poussée (17) sont agencés côte à côte dans la direction axiale du guidon (23),
dans lequel le dispositif de manette des gaz (10) comprend en outre :
un carter interne (15) qui loge le second élément d'inter-verrouillage (16) dans un intérieur,
dans lequel :
le carter interne (15) inclut une partie de moyen de venue en butée (15c ; 15c' ; 15c") qui fait saillie en direction de l'intérieur,
le second élément de poussée (17) pousse le second élément d'inter-verrouillage (16) dans la direction normale,
le second élément d'inter-verrouillage (16) inclut une partie de blocage (16a) qui est engagée avec le second élément de poussée (17) et une protubérance (16b ; 16b' ; 16b") qui vient en butée contre la partie de moyen de venue en butée (15c ; 15c' ; 15c"), et
la protubérance (16b ; 16b' ; 16b") est agencée sur un côté opposé de la partie de blocage (16a) par rapport à une première ligne qui est orthogonale à une seconde ligne qui relie la partie de blocage (16a) et un axe de rotation du second élément de poussée (17) et qui passe par l'axe de rotation,
dans lequel :
un axe de rotation du premier élément d'inter-verrouillage (20) et un axe de rotation du second élément d'inter-verrouillage (16) sont proches l'un de l'autre, et
le second élément d'inter-verrouillage (16) stocke une partie du premier élément d'inter-verrouillage (20),
**caractérisé en ce que** :
dans le cas où la manette des gaz (12) est entraînée en rotation dans la direction normale, le second élément d'inter-verrouillage (16) n'est pas entraîné en rotation, et le second élément de poussée (17) pousse en continu le second élément d'inter-verrouillage (16) dans la direction normale tandis qu'il n'est pas déformé.

2. Dispositif de manette des gaz (10) selon la revendication 1,
dans lequel la partie de blocage (16a) et la protubérance (16b ; 16b' ; 16b") se font sensiblement mutuellement face moyennant l'interposition d'un axe de rotation du second élément d'inter-verrouillage (16).

3. Dispositif de manette des gaz (10) selon la revendication 1
dans lequel, dans le cas où la manette des gaz (12) est entraînée en rotation dans la direction opposée, le premier élément d'inter-verrouillage et le second élément d'inter-verrouillage (16) peuvent tous deux être entraînés en rotation dans la direction opposée.

4. Dispositif de manette des gaz (10) selon la revendication 1,
dans lequel le second élément de poussée (17) inclut un ressort en forme de C qui comporte une ouverture (17d) formée par enlèvement de matière par découpe en un endroit.

5. Dispositif de manette des gaz (10) selon la revendication 4,
dans lequel, dans le cas où la manette des gaz (12) est entraînée en rotation dans la direction opposée, le ressort en forme de C (17) est déformé pour fermer l'ouverture (17d).

6. Dispositif de manette des gaz (10) selon la revendication 4, comprenant en outre le carter interne (15) qui loge le second élément d'inter-verrouillage (16) dans un intérieur et qui comporte une partie de moyen de venue en butée (15c ; 15c' ; 15c") qui fait saillie en direction de l'intérieur,
dans lequel :
le ressort en forme de C (17) inclut une partie d'engagement (17a, 17b) qui fait saillie depuis les deux extrémités de l'ouverture (17d) dans une direction radiale du ressort en forme de C (17) ou dans une direction axiale du guidon (23), et pousse le second élément d'inter-verrouillage (16) dans la direction normale via la partie d'engagement (17a, 17b), et
une protubérance (16b ; 16b' ; 16b") du second élément d'inter-verrouillage (16) fait saillie dans une direction radiale du second élément d'inter-verrouillage (16) ou dans la direction axiale du guidon (23) et vient en butée contre la partie de moyen de venue en butée (15c ; 15c' ; 15c") pour bloquer la rotation dans la direction normale du second élément d'inter-verrouillage (16).
